(19)

Europäisches
Patentamt
European
Patent Office
Office européen
des brevets

(11) **EP 4 110 650 B1**

(12) **EUROPEAN PATENT SPECIFICATION**

(45) Date of publication and mention
of the grant of the patent:
**13.03.2024 Bulletin 2024/11**

(21) Application number: **20710434.0**

(22) Date of filing: **26.02.2020**

(51) International Patent Classification (IPC):
**B60P 1/16** *(2006.01)*    **B60G 17/0195** *(2006.01)*

(52) Cooperative Patent Classification (CPC):
**B60P 1/162**

(86) International application number:
**PCT/EP2020/055031**

(87) International publication number:
**WO 2021/170231 (02.09.2021 Gazette 2021/35)**

(54) **AN ARTICULATED WORKING MACHINE VEHICLE**

GELENKIGES ARBEITSMASCHINENFAHRZEUG

VEHICULE DE TRAVAIL ARTICULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.01.2023 Bulletin 2023/01**

(73) Proprietor: **Volvo Construction Equipment AB
631 85 Eskilstuna (SE)**

(72) Inventors:
• **EKEVID, Torbjörn
570 12 Landsbro (SE)**
• **JOHANSSON, Peter
352 34 Växjö (SE)**
• **WILHELMSSON, Markus
352 49 Växjö (SE)**

(74) Representative: **Zacco Sweden AB
P.O. Box 5581
Löjtnantsgatan 21
114 85 Stockholm (SE)**

(56) References cited:
WO-A1-2013/154471    WO-A1-2016/195560
CN-A- 105 966 474    US-A1- 2015 159 729

**Description**

TECHNICAL FIELD

The invention relates to a working machine vehicle, such as an articulated hauler, provided with a suspension arrangement configured to reduce transfer of vibrations between a vehicle frame and a load container.

BACKGROUND

An articulated working machine vehicle comprises a front vehicle section and a rear vehicle section pivotally connected via a connection arrangement configured to control a pivot angle between the front and rear sections for steering of the vehicle. The rear vehicle section of an articulated hauler is typically provided with a tiltable load container (sometimes referred to as "body") arranged onto a supporting frame. Vibrations may be transferred between the frame and the load container when the load container is in a transport (lower) position and rests onto the frame. Such vibrations may increase wear and tear of the vehicle and/or may influence comfort for a driver in a front section cab.
Rubber supports may be arranged between the frame and the load container, but such rubber supports do not reduce transfer of vibrations in an efficient way.
US2015/0159729A1 discloses a suspension assembly for a payload carrier including various plates and elements forming a damper and a spring for the purpose of reducing transfer of vibrations to the payload carrier.
CN 105966474 discloses an active vibration damping support system for a mine dump truck including spring, damper, sensor, actuator, optimization calculation module, etc. for the purpose of providing e.g. active adjustment of vibration damping capacity.
There is a need for a load container suspension arrangement that is less complex. In particular there is a need for a load container suspension arrangement that is adapted to an articulated vehicle.

SUMMARY

This disclosure relates to a working machine vehicle provided with a supporting frame and a pivoted load container, wherein the vehicle is configured to allow tilting of the load container from a transport position to a tilted position for dumping of a load from the load container. The vehicle is provided with a suspension arrangement configured to reduce transfer of vibrations between the frame and the load container when the load container is in its transport position. The suspension arrangement comprises a spring element and a damper element, and the vehicle is further provided with at least one hydraulic hoist cylinder connected between the frame and the load container and arranged to lift and tilt the load container to the tilting position for dumping.
According to this disclosure, the hydraulic hoist cylinder forms part of a hydraulic system comprising a container for hydraulic fluid and at least one conduit that connects the hydraulic hoist cylinder with the container so as to form a flow passage for hydraulic fluid between the hydraulic hoist cylinder and the hydraulic container. The flow passage is arranged to exert a flow resistance to a hydraulic fluid flowing through the flow passage so as to dampen an oscillating flow through the flow passage and thereby form the damper element of the suspension arrangement.
That is, if the load container vibrates in relation to the frame, hydraulic fluid is forced to flow back and forth through the flow passage and because of the flow resistance, that may be generated by conduit diameter, bends and/or orifices, the vibrations are dampened.
A damping element is thus formed that makes use of the hydraulic hoist cylinders that normally are present anyway on an articulated hauler or a similar vehicle. Moreover, a suitable hydraulic system is normally also already present on at least articulated vehicles for steering of the vehicle and operating the lift cylinders, so only some adaptation of normally existing components is required to form the damping element of the suspension arrangement. Such already existing hydraulic systems are typically very robust systems, which provides for making also the damping element very robust.
The suspension arrangement may be activated when the (empty) load container is set in a "ride"-position where the load container is in its transport position but positioned a small distance from a supporting surface of the frame.
Compared to US2015/0159729A1 and CN105966474 the suspension arrangement of this disclosure is less complex and requires less additional components since (hydraulic) components already present, at least on most articulated vehicles, are used for vibration damping.
In an embodiment the hydraulic container is a closed accumulator partly filled with gas so as to function as a spring for an oscillating flow of hydraulic fluid and thereby form the spring element of the suspension arrangement. Enclosed gas provides for compression and expansion and can thereby function as a spring. The hydraulic system is in this case thus used also for achieving the resilient function. Additional spring elements may be used as a complement, such as mechanical helical coil springs. The accumulator may be connected to a piston chamber side of the hoist cylinder when the (empty) load container is set in the "ride"-position.

In an embodiment the hydraulic container is an open tank, wherein a first conduit connects the open tank with a high-pressure side of the hydraulic hoist cylinder, wherein a second conduit connects the open tank with a low-pressure side of the hydraulic hoist cylinder, and wherein the hydraulic hoist cylinder is configured to be set in a floating state in which the hydraulic fluid can flow through the hydraulic hoist cylinder between the high-pressure side and the low-pressure side, wherein the flow passage for hydraulic fluid forms a loop comprising the open tank, the first conduit, the hydraulic hoist cylinder and the second conduit, through which loop the hydraulic fluid can flow in either direction so as to form the damper element of the suspension arrangement. Also in this case the flow resistance may be generated by conduit diameter, bends and/or orifices, but it may additionally or alternatively be generated in the hydraulic hoist cylinder, such as in a connection between the high-pressure side and the low-pressure side.

In an embodiment the flow passage for hydraulic fluid is provided with orifices to increase flow resistance to a suitable level. What level is suitable depends on the particular application.

In an embodiment the suspension arrangement comprises a spring element in the form of at least one mechanical spring. This is of course of particular interest in variants where the hydraulic system is not used as spring element. Helical coils springs may be used.

In an embodiment the suspension arrangement is configured to split up a natural vibration frequency of the vehicle. For an articulated vehicle comprising front and rear vehicle sections and where the load container is arranged on the rear vehicle section, the natural vibration frequency is that of the rear vehicle section.

By introducing suitable spring and damper elements to the load container/body, the dynamic characteristic of the vehicle or rear vehicle section/load unit is modified. With a standard bogie suspension for an articulated hauler, the load unit has one distinct natural frequency corresponding to bouncing on the rear wheels, and related to pitching of the entire vehicle/hauler. Introducing a suspended body, the single natural frequency is split up into two separate frequencies; a lower self/eigen frequency of the body and an increased eigen frequency for the rest of the load unit. Furthermore, the rear frame displacement amplitude is reduced, which in turn reduces the displacement of the cab caused by the vehicle pitching motion. The natural frequencies of interest to prevent may vary depending on type of the dynamic characteristics of different machine types. For a typical articulated hauler the natural frequency corresponding to rear wheel bouncing is in the order of 2 Hz (for an unloaded body/load container).

The natural eigen frequency of the rear vehicle section/load unit that is of interest to damp out may be denoted "f". To achieve this the body/load container is suspended (in its "ride" position) in a spring suspension arranged so that the body/load container obtains the eigen frequency "f". This divides the previously single natural frequency into two eigen frequencies; the higher of these two frequencies excites the load unit/rear vehicle section (now without the mass of the body) and the lower excites both the load unit/rear vehicle section together with the body/load container (a frequency that now is dampened).

A spring stiffness "k" is suitably selected so that the body eigen frequency corresponds to the frequency desired to damp out, i.e. for instance the frequency 2 Hz. The spring stiffness can be obtained from:

$$k = (2\pi f)^2 (I_0 + mr^2) + mgr \sin(\alpha_0 + \alpha)$$

where

> $k$: Rotational stiffness around body (load container) hinge.
> $f$: Frequency of interest to prevent.
> $I_0$: Moment of inertia around c.o.g. (center of gravity) of body.
> $m$: Mass of empty body.
> $r$: Distance from body hinge to c.o.g. of body.
> $g$: Gravitational constant.
> $\alpha_0$: Angle lowered body to body c.o.g.
> $\alpha$: Angle lowered body c.o.g. to body c.o.g. in static equilibrium, supported by spring(s).

Since it is possible to use both a mechanical spring, typically arranged at a front edge of the body/load container, and a gas spring (hydraulic accumulator), it is convenient to express the spring stiffness as a rotational stiffness around the body hinge. For a typical articulated hauler the magnitude of the rotational stiffness $k$ might be around 110 kNm/deg. Useful intervals might be e.g. 100-120 or 90-130 kNm/deg depending on the vehicle.

A relative damping (damping ratio) for the spring suspended body of around 0.3-0.4 is likely to be suitable. The damping may be calculated from:

$$c = \zeta 2 I \omega_n$$

where

c: Damping of system.
$\zeta$: Damping ratio.
I: Moment of inertia of body around body hinge.
$\omega_n$: Natual frequency of suspended body.

A damping magnitude might be around 350 kNs/m.

That the suspension arrangement is configured to split up the natural vibration frequency of the rear vehicle section thus means that the spring stiffness "k" is adapted to the particular vehicle (such as to the mass of the empty body/load container) and selected so that the natural vibration frequency of the rear vehicle section is at least partly damped out.

In an embodiment the spring element is configured to keep an empty load container at some distance above a supporting surface of the frame when the load container is set in its transporting position. This is thus the "ride"-position mentioned above. Keeping a short distance between load container and frame supporting surface allows downstroke for the spring element. This distance may be around 10-20 cm (at the front of the load container opposite the hinge).

In an embodiment the hydraulic hoist cylinder comprises a piston, a piston rod, a piston side chamber and a piston rod side chamber.

In an embodiment the vehicle is provided with two hydraulic hoist cylinders, one on each side of the load container. The two hydraulic hoist cylinders may be connected to the same hydraulic container.

In an embodiment the vehicle is an articulated working machine vehicle, such as an articulated hauler, comprising a front vehicle section and a rear vehicle section pivotally connected via a connection arrangement configured to control a pivot angle between the front and rear sections for steering of the vehicle. Preferably, the supporting frame and the pivoted load container are arranged on the rear vehicle section.

In an embodiment relating to the articulated working machine vehicle, the suspension arrangement is configured to split up a natural vibration frequency of the rear vehicle section. In such an embodiment the natural vibration frequency of the rear vehicle section may be "f" and a spring stiffness of the spring element may be such that when expressed as a rotational stiffness "k" around a load container hinge, the spring stiffness satisfies the same expression as given above, i.e.:

$$k = (2\pi f)^2 (I_0 + mr^2) + mgr \sin(\alpha_0 + \alpha).$$

Further advantages and advantageous features of the invention are disclosed in the following description and in the dependent claims.

BRIEF DESCRIPTION OF THE DRAWINGS

With reference to the appended drawings, below follows a more detailed description of embodiments of the invention cited as examples.

In the drawings:

Fig. 1 shows an articulated hauler provided with a schematically depicted first embodiment of a suspension arrangement according to this disclosure.

Fig. 2 shows an articulated hauler provided with a schematically depicted second embodiment of a suspension arrangement according to this disclosure.

Fig. 3 shows a schematic view of a load container and some parameters used to calculate a suitable rotational stiffness.

DETAILED DESCRIPTION OF EXAMPLE EMBODIMENTS OF THE INVENTION

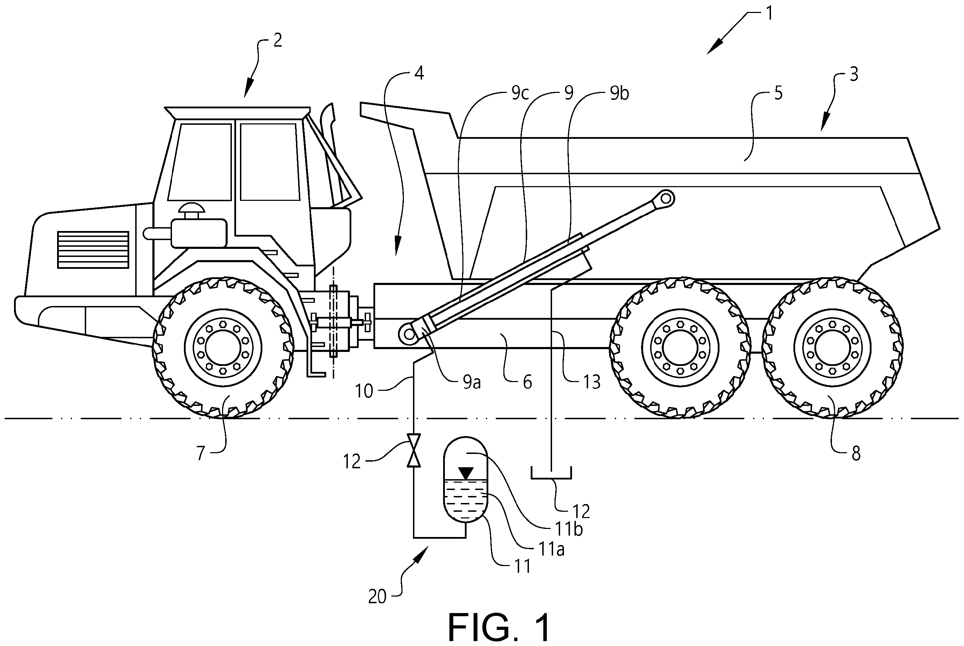

Figure 1 shows a working machine vehicle in the form of an articulated hauler 1. The vehicle 1 comprises a front vehicle section 2 (front unit) and a rear vehicle section 3 (load unit) pivotally connected via a connection arrangement

4 configured to control a pivot angle between the front and rear sections 2, 3 for steering of the vehicle 1. The rear vehicle section 3 is provided with a supporting frame 6 and a pivoted load container 5 (body). The vehicle 1 is configured, by means of a pair of hydraulic hoist cylinders 9 (one on each side of the load container 5), to allow tilting of the load container 5 from a transport position (as shown in figure 1) to a tilted position for dumping of a load from the load container 5. A drivers cab is arranged on the front vehicle section 2. One pair of wheels 7 is arranged on the front vehicle section 2 and two pair of wheels 8 on the rear section 3. The vehicle 1 further comprises hydraulic systems for e.g. controlling the pivot angle and steer the vehicle and for extending the hoist cylinders 9 for dumping.

Figure 1 shows further that the vehicle 1 is provided with a first example of a suspension arrangement 20 configured to reduce transfer of vibrations between the frame 6 and the load container 5 when the load container 5 is in its transport position. It should be noted that the suspension system 20 is only schematically depicted in figure 1.

The suspension arrangement 20 comprises a spring element and a damper element and is in this example a fully hydraulic system comprising the hydraulic hoist cylinders 9, a container for hydraulic fluid in the form of a closed accumulator 11 partly filled with gas 11b and a conduit 10 that connects a piston side chamber 9a (i.e. high-pressure side) of the hydraulic hoist cylinder 9 with the accumulator 11. The conduit 10 thus forms a flow passage for hydraulic fluid between the piston side chamber 9a of the hydraulic hoist cylinder 9 and the accumulator 11. The flow passage/conduit 10 is provided with an orifice 12 to increase flow resistance to a hydraulic fluid flowing through the flow passage 10.

Although not visible in figure 1, the (empty) load container 5 is set in a "ride"-position where the load container 5 is in its transport position but positioned a small distance from a supporting surface of the frame 6 to allow vibrational movements both upwards and downwards in relation to the frame 6.

When the load container 5 moves (vibrates) in relation to the frame 6, hydraulic fluid is forced to flow through the flow passage/conduit 10 and because of the flow resistance provided by the orifice 12 the movement (the vibrations) are dampened. In this case the hydraulic fluid flows through the flow passage/conduit 10 back and forth in an oscillating manner when the load container 5 vibrates in relation to the frame 6.

Because the hydraulic accumulator 11 is a closed container partly filled with gas 11b, and partly with hydraulic fluid 11a, and because gas can be compressed and then expand, the accumulator 11 functions as a spring for the oscillating flow of hydraulic fluid and thereby forms the spring element of the suspension arrangement 20.

Figure 1 also shows an open tank 12 and a further conduit 13 that connects the open tank 12 with a piston rod side chamber 9b of the hoist cylinder 9. The open tank 12 functions as a reservoir for hydraulic fluid during normal hoisting operation of the hydraulic hoist cylinders 109. A still further conduit (not shown) connects the open tank 12 with the piston side chamber 9a of the cylinder 109.

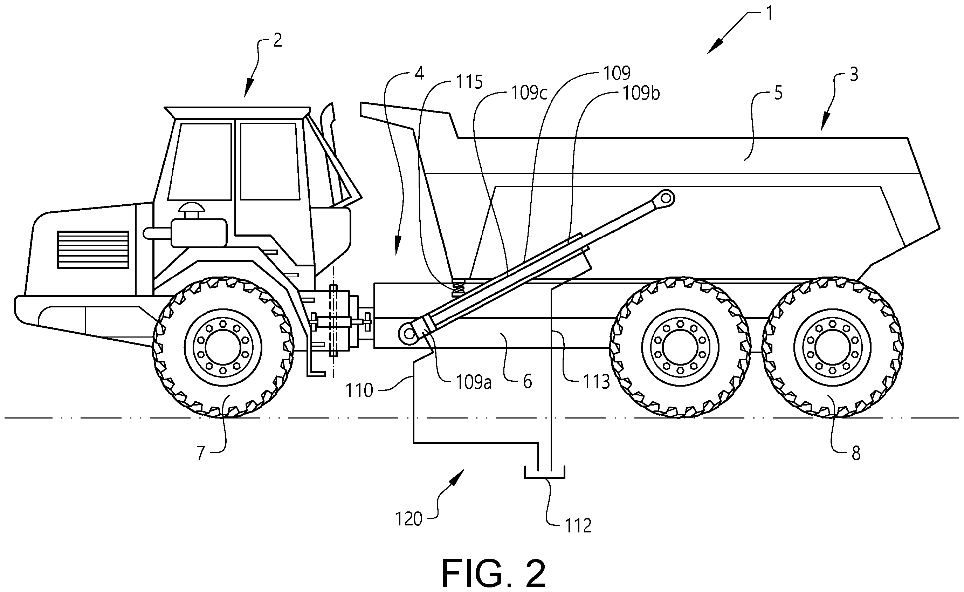

Figure 2 shows a vehicle 1 similar to the vehicle of figure 1 but in this case the vehicle 1 is provided with a second example of a suspension arrangement 120 configured to reduce transfer of vibrations between the frame 6 and the load container 5 when the load container 5 is in its transport position, and in particular when set in its "ride"-position similar to what is described in relation to figure 1. It should be noted also in the example shown in figure 2 that the suspension system 120 is only schematically depicted.

As shown in figure 2, the hydraulic container is now an open tank 112. A first conduit 110 connects the open tank 112 with the piston side chamber 109a of the hydraulic hoist cylinder 109 and a second conduit 113 connects the open tank 112 with the piston rod side chamber 109b of the hydraulic hoist cylinder 109. The hydraulic hoist cylinder 109 is configured to be set in a floating state in which the hydraulic fluid can flow through the hydraulic hoist cylinder 109 between the piston side chamber 109a and the piston rod side chamber 109b. The flow restricted flow passage for hydraulic fluid forms thus in this example a loop comprising the open tank 112, the first conduit 110, the hydraulic hoist cylinder 109 and the second conduit 113, through which loop the hydraulic fluid can flow in either direction so as to form the damper element of the suspension arrangement 120. The flow restriction is in this case generated by flow friction for the hydraulic fluid when it flows through the hoist cylinder 109. If this flow friction is not sufficient for the damping effect desired, an orifice (not shown in figure 2) may be arranged between tank 112 and cylinder 109.

When the load container 5 vibrates in relation to the frame 6, hydraulic fluid is also in this case forced to flow back and forth in an oscillating manner through the flow passage loop to and from the tank 112 and because of the flow resistance provided by friction (or an orifice) the vibrations are dampened.

Figure 2 further shows that the second example of the suspension arrangement 120 comprises a spring element in the form of at least one mechanical spring 115 arranged between the frame 6 and the load container 5.

In the examples above the hydraulic hoist cylinder 9, 109 as such is of a conventional type where the piston rod is connected to the piston and where the piston is movable back on forth inside the cylinder.

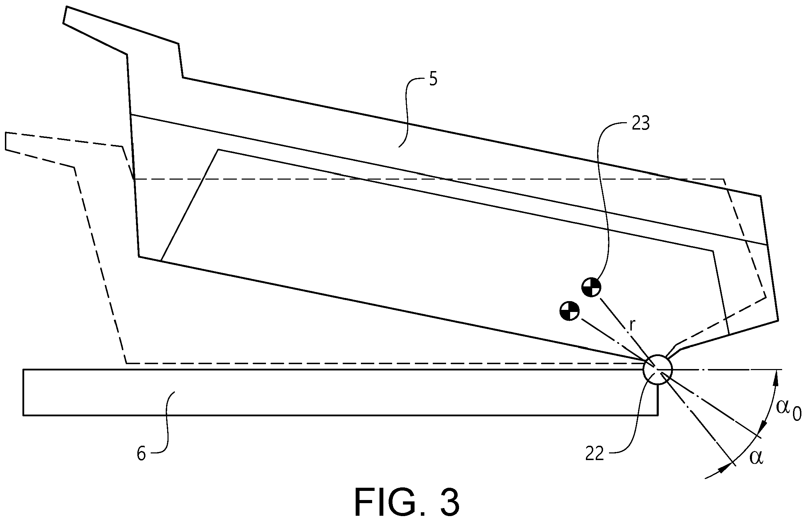

Figure 3 shows a schematic view of the load container 5, the frame 6, a load container hinge 22, and some parameters, namely center of gravity 23 (c.o.g.) at different angles $\alpha$, used to calculate a suitable rotational stiffness "k" around the load container/body hinge 22. It should be noted that figure 3 is only schematic so the c.o.g. 23 is not correctly indicated in figure 3 (it should typically be more to the left in figure 3).

Each of the suspension arrangements 20, 120 is configured to split up a natural vibration frequency of the rear vehicle section 3. This is done by selecting the spring stiffness $k$ so that the body eigen frequency corresponds to the frequency desired to split up and damp out, i.e. for instance the frequency 2 Hz (see also further explanations above). The spring stiffness is in this example obtained from:

$$k = (2\pi f)^2 (I_0 + mr^2) + mgr \sin(\alpha_0 + \alpha)$$

where

> $k$: Rotational stiffness around body (load container) hinge 22.
> $f$: Frequency of interest to prevent.
> $I_0$: Moment of inertia around c.o.g. 23 of body 5.
> $m$: Mass of empty body 5.
> $r$: Distance from body hinge 22 to c.o.g. 23 of body 5.
> $g$: Gravitational constant.
> $\alpha_0$: Angle lowered body 5 to body c.o.g. 23
> $\alpha$: Angle lowered body c.o.g. to body c.o.g. in static equilibrium, supported by spring(s).

Since it is possible to use both a mechanical spring, typically arranged at a front edge of the body/load container, and a gas spring (hydraulic accumulator), it is convenient to express the spring stiffness as a rotational stiffness around the body hinge. For articulated haulers of the type exemplified in figures 1 and 2 the rotational stiffness $k$ is around 110 kNm/deg.

A relative damping (damping ratio) of around 0.3-0.4 for the spring suspended body 5 is suitable for articulated haulers of the type exemplified in figures 1 and 2. The damping may be calculated from:

$$c = \zeta 2 I \omega_n$$

where

> $c$: Damping of system.
> $\zeta$: Damping ratio.
> $I$: Moment of inertia of body 5 around body hinge 22.
> $\omega_n$: Natual frequency of suspended body 5.

A damping magnitude of around 350 kNs/m is suitable for the examples described here.

The hydraulic parts of the suspension arrangements 20, 120 may in practice be arranged in different ways and be located at various places on board the vehicle.

It is to be understood that the present invention is not limited to the embodiments described above and illustrated in the drawings; rather, the skilled person will recognize that many changes and modifications may be made within the scope of the appended claims.

**Claims**

1. A working machine vehicle (1) provided with a supporting frame (6) and a pivoted load container (5), wherein the vehicle (1) is configured to allow tilting of the load container (5) from a transport position to a tilted position for dumping of a load from the load container (5), wherein the vehicle (1) is provided with a suspension arrangement (20, 120) configured to reduce transfer of vibrations between the frame (6) and the load container (5) when the load container (5) is in its transport position, wherein the suspension arrangement (20, 120) comprises a spring element (11, 115) and a damper element (9, 10, 11, 109, 110, 112, 113), and wherein the vehicle (1) further is provided with at least one hydraulic hoist cylinder (9, 109) connected between the frame (6) and the load container (5) and arranged to lift and tilt the load container (5) to the tilting position for dumping,
**characterized in**
**that** the hydraulic hoist cylinder (9, 109) forms part of a hydraulic system comprising a container (11, 112) for hydraulic fluid and at least one conduit (10, 110, 113) that connects the hydraulic hoist cylinder (9, 109) with the container (11, 112) so as to form a flow passage for hydraulic fluid between the hydraulic hoist cylinder (9, 109) and the hydraulic container (11, 112), and wherein the flow passage is arranged to exert a flow resistance to a hydraulic fluid flowing through the flow passage so as to dampen an oscillating flow through the flow passage and thereby form the damper element of the suspension arrangement (20, 120).

2. The vehicle (1) according to claim 1, wherein the hydraulic container is a closed accumulator (11) partly filled with gas (11b) so as to function as a spring for an oscillating flow of hydraulic fluid and thereby form the spring element (11) of the suspension arrangement (20).

3. The vehicle (1) according to claim 1, wherein the hydraulic container is an open tank (112), wherein a first conduit (110) connects the open tank (112) with a piston side chamber (109a) of the hydraulic hoist cylinder (109), wherein a second conduit (113) connects the open tank (112) with a piston rod side chamber (109b) of the hydraulic hoist cylinder (109), and wherein the hydraulic hoist cylinder (109) is configured to be set in a floating state in which the hydraulic fluid can flow through the hydraulic hoist cylinder (109) between the piston side chamber (109a) and the piston rod side chamber (109b), wherein the flow passage for hydraulic fluid forms a loop comprising the open tank (112), the first conduit (110), the hydraulic hoist cylinder (109) and the second conduit (113), through which loop the hydraulic fluid can flow in either direction so as to form the damper element of the suspension arrangement (120).

4. The vehicle (1) according to any of the above claims, wherein the flow passage for hydraulic fluid is provided with at least one orifice (12) to increase flow resistance to a suitable level.

5. The vehicle (1) according to any of the above claims, wherein the suspension arrangement (120) comprises a spring element in the form of at least one mechanical spring (115).

6. The vehicle (1) according to any of the above claims, wherein the suspension arrangement (20, 120) is configured to split up a natural vibration frequency of the vehicle (1).

7. The vehicle (1) according to claim 6, wherein the natural vibration frequency is "f" and wherein a spring stiffness of the spring element (11, 115) is such that when expressed as a rotational stiffness "k" around a load container hinge 22, the spring stiffness satisfies the following expression:.

$$k = (2\pi f)^2(I_0 + mr^2) + mgr\sin(\alpha_0 + \alpha)$$

where

k: Rotational stiffness around body (load container) hinge 22.
f: Frequency of interest to prevent.
$I_0$: Moment of inertia around c.o.g. (center of gravity) 23 of body 5.
m: Mass of empty body 5.
r: Distance from body hinge 22 to c.o.g. 23 of body 5.
g: Gravitational constant.
$\alpha_0$: Angle lowered body 5 to body c.o.g. 23
$\alpha$: Angle lowered body c.o.g. to body c.o.g. in static equilibrium, supported by spring(s).

8. The vehicle (1) according to any of the above claims, wherein the spring element (11, 115) is configured to keep an empty load container (5) at some distance above a supporting surface of the frame (6) when the load container is set in its transporting position.

9. The vehicle (1) according to any of the above claims, wherein the hydraulic hoist cylinder (9, 109) comprises a piston, a piston rod, a piston side chamber (9a, 109a) and a piston rod side chamber (9b, 109b).

10. The vehicle (1) according to any of the above claims, wherein the vehicle (1) is provided with two hydraulic hoist cylinders (109), one on each side of the load container (5).

11. The vehicle (1) according to any of the above claims, wherein the vehicle (1) is an articulated working machine vehicle (1), such as an articulated hauler, comprising a front vehicle section (2) and a rear vehicle section (3) pivotally connected via a connection arrangement (4) configured to control a pivot angle between the front and rear sections (2, 3) for steering of the vehicle (1).

12. The vehicle (1) according to claim 11, wherein the supporting frame (6) and the pivoted load container (5) are arranged on the rear vehicle section (3).

13. The vehicle (1) according to claim 12, wherein the suspension arrangement (20, 120) is configured to split up a natural vibration frequency of the rear vehicle section (3).

14. The vehicle (1) according to claim 13, wherein the natural vibration frequency of the rear vehicle section (3) is "f" and wherein a spring stiffness of the spring element (11, 115) is such that when expressed as a rotational stiffness "k" around a load container hinge 22, the spring stiffness satisfies the following expression:.

$$k = (2\pi f)^2(I_0 + mr^2) + mgr\sin(\alpha_0 + \alpha)$$

where

    *k: Rotational stiffness around body (load container) hinge 22.*
    *f: Frequency of interest to prevent.*
    *$I_0$: Moment of inertia around c.o.g. (center of gravity) 23 of body 5.*
    *m: Mass of empty body 5.*
    *r: Distance from body hinge 22 to c.o.g. 23 of body 5.*
    *g: Gravitational constant.*
    *$\alpha_0$: Angle lowered body 5 to body c.o.g. 23*
    *$\alpha$: Angle lowered body c.o.g. to body c.o.g. in static equilibrium, supported by spring(s).*

**Patentansprüche**

1. Arbeitsmaschinenfahrzeug (1), das mit einem Tragrahmen (6) und einem schwenkbaren Lastbehälter (5) versehen ist, wobei das Fahrzeug (1) so konfiguriert ist, dass es ein Kippen des Lastbehälters (5) von einer Transportposition in eine gekippte Position zum Abladen einer Last aus dem Lastbehälter (5) ermöglicht, wobei das Fahrzeug (1) mit einer Aufhängeanordnung (20, 120) versehen ist, die konfiguriert ist, um die Übertragung von Vibrationen zwischen dem Rahmen (6) und dem Lastbehälter (5) zu reduzieren, wenn sich der Lastbehälter (5) in seiner Transportposition befindet, wobei die Aufhängeanordnung (20, 120) ein Federelement (11, 115) und ein Dämpferelement (9, 10, 11, 109, 110, 112, 113) umfasst und wobei das Fahrzeug (1) ferner mit mindestens einem hydraulischen Hubzylinder (9, 109) versehen ist, der zwischen dem Rahmen (6) und dem Lastbehälter (5) verbunden ist und angeordnet ist, um den Lastbehälter (5) zum Abladen in die Kippposition anzuheben und zu kippen,
**dadurch gekennzeichnet, dass**
der hydraulische Hubzylinder (9, 109) einen Teil eines Hydrauliksystems bildet, das einen Behälter (11, 112) für Hydraulikflüssigkeit und mindestens eine Leitung (10, 110, 113) umfasst, die den hydraulischen Hubzylinder (9, 109) mit dem Behälter (11, 112) verbindet, um einen Strömungsdurchlass für Hydraulikflüssigkeit zwischen dem hydraulischen Hubzylinder (9, 109) und dem Hydraulikbehälter (11, 112) zu bilden, und wobei der Strömungsdurchlass dazu angeordnet ist, einen Strömungswiderstand auf eine durch den Strömungsdurchlass strömende Hydraulikflüssigkeit auszuüben, um eine oszillierende Strömung durch den Strömungsdurchlass zu dämpfen und dadurch das Dämpferelement der Aufhängeanordnung (20, 120) zu bilden.

2. Fahrzeug (1) nach Anspruch 1, wobei der Hydraulikbehälter ein geschlossener Speicher (11) ist, der teilweise mit Gas (11b) gefüllt ist, um als Feder für eine oszillierende Strömung von Hydraulikflüssigkeit zu fungieren und dadurch das Federelement (11) der Aufhängeanordnung (20) zu bilden.

3. Fahrzeug (1) nach Anspruch 1, wobei der Hydraulikbehälter ein offener Tank (112) ist, wobei eine erste Leitung (110) den offenen Tank (112) mit einer kolbenseitigen Kammer (109a) des hydraulischen Hubzylinders (109) verbindet, wobei eine zweite Leitung (113) den offenen Tank (112) mit einer kolbenstangenseitigen Kammer (109b) des hydraulischen Hubzylinders (109) verbindet und wobei der hydraulische Hubzylinder (109) so konfiguriert ist, dass er in einen schwimmenden Zustand versetzt wird, in dem die Hydraulikflüssigkeit durch den hydraulischen Hubzylinder (109) zwischen der kolbenseitigen Kammer (109a) und der kolbenstangenseitigen Kammer (109b) strömen kann, wobei der Strömungsdurchlass für Hydraulikflüssigkeit eine Schleife bildet, die den offenen Tank (112), die erste Leitung (110), den hydraulischen Hubzylinder (109) und die zweite Leitung (113) umfasst, wobei die Hydraulikflüssigkeit in beide Richtungen durch die Schleife strömen kann, um das Dämpferelement der Aufhängeanordnung (120) zu bilden.

4. Fahrzeug (1) nach einem der vorstehenden Ansprüche, wobei der Strömungsdurchlass für Hydraulikflüssigkeit mit mindestens einer Öffnung (12) versehen ist, um den Strömungswiderstand auf ein geeignetes Niveau anzuheben.

5. Fahrzeug (1) nach einem der vorstehenden Ansprüche, wobei die Aufhängeanordnung (120) ein Federelement in Form mindestens einer mechanischen Feder (115) umfasst.

6. Fahrzeug (1) nach einem der vorstehenden Ansprüche, wobei die Aufhängeanordnung (20, 120) konfiguriert ist, um eine Eigenschwingungsfrequenz des Fahrzeugs (1) aufzuspalten.

7. Fahrzeug (1) nach Anspruch 6, wobei die Eigenschwingungsfrequenz "f" ist und wobei eine Federsteifigkeit des Federelements (11, 115) derart ist, dass, wenn sie als Rotationssteifigkeit "k" um ein Lastbehälterscharnier 22 ausgedrückt wird, die Federsteifigkeit den folgenden Ausdruck erfüllt:

$$k = (2\pi f)^2 (I_0 + mr^2) + mgr \sin(\alpha_0 + \alpha)$$

wobei

*k: Rotationssteifigkeit um das Scharnier 22 des Körpers (Lastbehälter).*
*f: Zu verhindernde Frequenz von Interesse.*
*$I_0$: Trägheitsmoment um den Schwerpunkt 23 des Körpers 5.*
*m: Masse des leeren Körpers 5.*
*r: Abstand vom Scharnier 22 des Körpers bis zum Schwerpunkt 23 des Körpers 5.*
*g: Gravitationskonstante.*
*$\alpha_0$: Winkel abgesenkter Körper 5 bis Körper-Schwerpunkt 23*
*$\alpha$: Winkel Schwerpunkt abgesenkter Körper bis Körper-Schwerpunkt im statischen Gleichgewicht, getragen durch (eine) Feder (n).*

8. Fahrzeug (1) nach einem der vorstehenden Ansprüche, wobei das Federelement (11, 115) konfiguriert ist, um einen leeren Lastbehälter (5) in einem gewissen Abstand über einer Tragfläche des Rahmens (6) zu halten, wenn der Lastbehälter in seine Transportposition gebracht ist.

9. Fahrzeug (1) nach einem der vorstehenden Ansprüche, wobei der hydraulische Hubzylinder (9, 109) einen Kolben, eine Kolbenstange, eine kolbenseitige Kammer (9a, 109a) und eine kolbenstangenseitige Kammer (9b, 109b) umfasst.

10. Fahrzeug (1) nach einem der vorstehenden Ansprüche, wobei das Fahrzeug (1) mit zwei hydraulischen Hubzylindern (109) versehen ist, einer auf jeder Seite des Lastbehälters (5).

11. Fahrzeug (1) nach einem der vorstehenden Ansprüche, wobei das Fahrzeug (1) ein gelenkiges Arbeitsmaschinenfahrzeug (1), wie etwa ein knickgelenkter Dumper, ist, umfassend einen vorderen Fahrzeugabschnitt (2) und einen hinteren Fahrzeugabschnitt (3), die über eine Verbindungsanordnung (4) schwenkbar verbunden sind, die konfiguriert ist, um einen Schwenkwinkel zwischen dem vorderen und dem hinteren Abschnitt (2, 3) zum Lenken des Fahrzeugs (1) zu steuern.

12. Fahrzeug (1) nach Anspruch 11, wobei der Tragrahmen (6) und der schwenkbare Lastbehälter (5) am hinteren Fahrzeugabschnitt (3) angeordnet sind.

13. Fahrzeug (1) nach Anspruch 12, wobei die Aufhängeanordnung (20, 120) konfiguriert ist, um eine Eigenschwingungsfrequenz des hinteren Fahrzeugabschnitts (3) aufzuspalten.

14. Fahrzeug (1) nach Anspruch 13, wobei die Eigenschwingungsfrequenz des hinteren Fahrzeugabschnitts (3) "f" ist und wobei eine Federsteifigkeit des Federelements (11, 115) derart ist, dass, wenn sie als Rotationssteifigkeit "k" um ein Lastbehälterscharnier 22 ausgedrückt wird, die Federsteifigkeit den folgenden Ausdruck erfüllt:

$$k = (2\pi f)^2 (I_0 + mr^2) + mgr \sin(\alpha_0 + \alpha)$$

wobei

k: Rotationssteifigkeit um das Scharnier 22 des Körpers (Lastbehälter) .

f: Zu verhindernde Frequenz von Interesse.

$I_0$: Trägheitsmoment um den Schwerpunkt 23 des Körpers 5.

m: Masse des leeren Körpers 5.

r: Abstand vom Scharnier 22 des Körpers bis zum Schwerpunkt 23 des Körpers 5.

g: Gravitationskonstante.

$\alpha_0$: Winkel abgesenkter Körper 5 bis Körper-Schwerpunkt 23

$\alpha$: Winkel Schwerpunkt abgesenkter Körper bis Körper-Schwerpunkt im statischen Gleichgewicht, getragen durch (eine) Feder (n).

**Revendications**

1. Véhicule de travail (1) pourvu d'un cadre de support (6) et d'un conteneur de charge pivotant (5), dans lequel le véhicule (1) est configuré pour permettre l'inclinaison du conteneur de charge (5) d'une position de transport à une position inclinée pour déverser une charge du conteneur de charge (5), dans lequel le véhicule (1) est pourvu d'un agencement de suspension (20, 120) configuré pour réduire le transfert de vibrations entre le cadre (6) et le conteneur de charge (5) lorsque le conteneur de charge (5) est dans sa position de transport, dans lequel le système de suspension (20, 120) comprend un élément ressort (11, 115) et un élément amortisseur (9, 10, 11, 109, 110, 112, 113), et dans lequel le véhicule (1) est en outre pourvu d'au moins un vérin de levage hydraulique (9, 109) connecté entre le cadre (6) et le conteneur de charge (5) et agencé pour soulever et incliner le conteneur de charge (5) jusqu'à la position d'inclinaison pour le déversement,
   **caractérisé en ce**
   **que** le vérin de levage hydraulique (9, 109) fait partie d'un système hydraulique comprenant un conteneur (11, 112) pour fluide hydraulique et au moins un conduit (10, 110, 113) qui connecte le vérin de levage hydraulique (9, 109) au conteneur (11, 112) de manière à former un passage d'écoulement pour fluide hydraulique entre le vérin de levage hydraulique (9, 109) et le conteneur hydraulique (11, 112), et dans lequel le passage d'écoulement est agencé pour exercer une résistance à l'écoulement sur un fluide hydraulique s'écoulant à travers le passage d'écoulement de manière à amortir un écoulement oscillant à travers le passage d'écoulement et former ainsi l'élément amortisseur de l'agencement de suspension (20, 120).

2. Véhicule (1) selon la revendication 1, dans lequel le conteneur hydraulique est un accumulateur fermé (11) partiellement rempli de gaz (11b) de manière à fonctionner comme un ressort pour un écoulement oscillant de fluide hydraulique et former ainsi l'élément ressort (11) du système de suspension (20) .

3. Véhicule (1) selon la revendication 1, dans lequel le conteneur hydraulique est un réservoir ouvert (112), dans lequel un premier conduit (110) connecte le réservoir ouvert (112) à une chambre côté piston (109a) du vérin de levage hydraulique (109), dans lequel un second conduit (113) connecte le réservoir ouvert (112) à une chambre côté tige de piston (109b) du vérin de levage hydraulique (109), et dans lequel le vérin de levage hydraulique (109) est configuré pour être placé dans un état flottant dans lequel le fluide hydraulique peut s'écouler à travers le vérin de levage hydraulique (109) entre la chambre côté piston (109a) et la chambre côté tige de piston (109b), dans lequel le passage d'écoulement pour fluide hydraulique forme une boucle comprenant le réservoir ouvert (112), le premier conduit (110), le vérin de levage hydraulique (109) et le second conduit (113), à travers laquelle boucle le fluide hydraulique peut s'écouler dans les deux sens de manière à former l'élément amortisseur de l'agencement de suspension (120).

4. Véhicule (1) selon l'une quelconque des revendications cidessus, dans lequel le passage d'écoulement pour fluide hydraulique est pourvu d'au moins un orifice (12) pour augmenter la résistance à l'écoulement jusqu'à un niveau approprié.

5. Véhicule (1) selon l'une quelconque des revendications cidessus, dans lequel l'agencement de suspension (120) comprend un élément ressort sous la forme d'au moins un ressort mécanique (115) .

6. Véhicule (1) selon l'une quelconque des revendications cidessus, dans lequel l'agencement de suspension (20, 120) est configuré pour diviser une fréquence de vibration naturelle du véhicule (1).

**7.** Véhicule (1) selon la revendication 6, dans lequel la fréquence de vibration naturelle est « f » et dans lequel une raideur de ressort de l'élément ressort (11, 115) est telle que lorsqu'elle est exprimée comme une raideur en rotation « k » autour d'une charnière de conteneur de charge 22, la raideur de ressort satisfait à l'expression suivante :

$$k = (2\pi f)^2 (I_0 + mr^2) + mgr\ sin(\alpha_0 + \alpha)$$

où

   *k : Raideur en rotation autour de la charnière 22 du corps (conteneur de charge).*
   *f : Fréquence d'intérêt à prévenir.*
   $I_0$ *: Moment d'inertie autour du c. d. g. (centre de gravité) 23 du corps 5.*
   *m : Masse du corps vide 5.*
   *r : Distance de la charnière 22 du corps jusqu'au c. d. g. 23 du corps 5.*
   *g : Constante gravitationnelle.*
   $\alpha_0$ *: Angle abaissé du corps 5 par rapport au c. d. g. 23 du corps*
   $\alpha$ *: Angle abaissé du c. d. g. du corps par rapport au c. d. g. du corps en équilibre statique, soutenu par un ou plusieurs ressorts.*

**8.** Véhicule (1) selon l'une quelconque des revendications cidessus, dans lequel l'élément ressort (11, 115) est configuré pour maintenir un conteneur de charge vide (5) à une certaine distance au-dessus d'une surface de support du cadre (6) lorsque le conteneur de charge est placé dans sa position de transport.

**9.** Véhicule (1) selon l'une quelconque des revendications cidessus, dans lequel le vérin de levage hydraulique (9, 109) comprend un piston, une tige de piston, une chambre côté piston (9a, 109a) et une chambre côté tige de piston (9b, 109b).

**10.** Véhicule (1) selon l'une quelconque des revendications cidessus, dans lequel le véhicule (1) est pourvu de deux vérins de levage hydrauliques (109), un de chaque côté du conteneur de charge (5).

**11.** Véhicule (1) selon l'une quelconque des revendications cidessus, dans lequel le véhicule (1) est un véhicule de travail articulé (1), tel qu'un tombereau articulé, comprenant une section de véhicule avant (2) et une section de véhicule arrière (3) connectée de manière pivotante via un agencement de connexion (4) configuré pour commander un angle de pivotement entre les sections avant et arrière (2, 3) pour la direction du véhicule (1).

**12.** Véhicule (1) selon la revendication 11, dans lequel le cadre de support (6) et le conteneur de charge pivotant (5) sont agencés sur la section de véhicule arrière (3).

**13.** Véhicule (1) selon la revendication 12, dans lequel l'agencement de suspension (20, 120) est configuré pour diviser une fréquence de vibration naturelle de la section de véhicule arrière (3).

**14.** Véhicule (1) selon la revendication 13, dans lequel la fréquence de vibration naturelle de la section de véhicule arrière (3) est « f » et dans lequel une raideur de ressort de l'élément ressort (11, 115) est telle que lorsqu'elle est exprimée comme une raideur en rotation « k » autour d'une charnière de conteneur de charge 22, la raideur du ressort satisfait à l'expression suivante :

$$k = (2\pi f)^2 (I_0 + mr^2) + mgr\ sin(\alpha_0 + \alpha)$$

où

   *k : Raideur en rotation autour de la charnière 22 du corps (conteneur de charge).*
   *f : Fréquence d'intérêt à prévenir.*
   $I_0$ *: Moment d'inertie autour du c. d. g. (centre de gravité) 23 du corps 5.*
   *m : Masse du corps vide 5.*
   *r : Distance de la charnière 22 du corps jusqu'au c. d. g. 23 du corps 5.*
   *g : Constante gravitationnelle.*
   $\alpha_0$ *: Angle abaissé du corps 5 par rapport au c. d. g. 23 du corps*

α : *Angle abaissé du c. d. g. du corps par rapport au c. d. g. du corps en équilibre statique, soutenu par un ou plusieurs ressorts.*

α : *Angle abaissé du c. d. g. du corps par rapport au c. d. g. du corps en équilibre statique, soutenu par un ou plusieurs ressorts.*

FIG. 1

EP 4 110 650 B1

FIG. 2

EP 4 110 650 B1

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150159729 A1

- CN 105966474